# EUROPEAN PATENT SPECIFICATION

(11) **EP 2 267 406 B1**
(45) Date of publication and mention of the grant of the patent: **18.04.2012**
(21) Application number: 09163518.5
(22) Date of filing: 23.06.2009
(51) Int. Cl.: G01C 9/34, G01B 3/04, G01B 3/12, A61G 5/10

(54) **Distance measuring device**
Vorrichtung zur Distanzmessung
Dispositif de mesure de distance

(43) Date of publication of application: 29.12.2010
(73) Proprietor: Invacare International Sàrl, 1196 Gland (CH)
(72) Inventor: Clausen, Berit, 4450 Sissach (CH); Primosig, Martin, 4053 Basel (CH); Glanzmann, Erich, 4107 Ettingen (CH)
(74) Representative: Ganguillet, Cyril

(56) References cited:
- GB-A- 2 291 012
- US-A- 1 509 451
- US-A- 2 728 989
- US-A- 3 852 889
- US-A- 4 693 011
- US-A- 5 361 504
- US-A- 5 463 817
- US-B1- 6 305 093
- US-B1- 6 467 179

## Description

### FIELD OF THE INVENTION

The present invention relates to a device for measuring the horizontal distance separating two horizontal parallel axis of a mechanical structure.

### BACKGROUND OF THE INVENTION

In a lot of mechanical structures, especially the mechanical structures for which the user needs to adapt the dimension of the frame or the disposition of the elements constituting the structure to his specific use, there is a need for easily measuring the distance existing between two horizontal parallel axis of the structure, said axis going through a connection point or a pivot center of the frame. Indeed, the modification of the relative positions of these two axis can offer a more adapted configuration of the structure to the personal needs of the user.

This is particularly relevant in the field of wheelchairs for which the configuration of the wheelchair must be adapted to the user's own anatomy. Therefore, the adaptation consists in modifying the length and/or the position of the profiling elements constituting the seat of the wheelchair. Such modifications can be made for instance by displacing the position of an assembling means used for connecting together two profiled elements of the wheelchair frame. Generally, for doing these modifications, the existing wheelchairs include specific devices for easily adjusting the position of the assembling means. One of these devices consists for instance in several assembly holes formed in the profiled elements of the wheelchair frame in which one or several screws can be placed and secured by a bolt.

However, in these existing wheelchairs, no simple solution exists for easily adjusting the position of the seat relatively to the rear wheels of the wheelchair. In particular, if one wants to find the best configuration for the user, considering his anatomy, one must also take into consideration the horizontal distance between the position of the rear wheel axle and the position of backrest of the wheelchair. Indeed, this distance can influence the tendency to tipping of the wheelchair, this tendency being dependent on the anatomy of the user. To be sure that the modifications made to the seat do not impact badly on the tendency to tipping of the wheelchair, one must evaluate if the distance measured between the position of the rear wheel axle and the position of the backrest of the seat is approximately equal to a reference value generally given by the manufacturer or the seller of the wheelchair. If the measured distance is less or over this value, the wheelchair will have a tendency of tipping during its use.

However, to determine this reference value, one must know the specific lengths of several body parts of the user, said lengths characterizing the user's anatomy, and reporting these lengths in a specific data table, said table indicating the reference value for this horizontal distance. This operation can be long and painful for the user if one needs to measure these lengths directly on the user's body and, sometimes, impossible to be carried out if the user is very disabled. Therefore, one prefers to measure this reference value directly on an already used wheelchair of the user. Indeed, one is sure that, in this already used wheelchair, the lengths of the structural elements and the distance between these elements have been defined in conformity with the user's anatomy. The problem in this operation is the difficulty to measure the horizontal distance between two horizontal parallel axis when at least one axis is not easily accessible. In the specific case mentioned above, one axis corresponds to the rear wheel axis and the other axis corresponds to the horizontal axis, parallel to the rear wheel axis and going through the lowest point reached by the backrest of the wheelchair. This point is positioned behind the rear wheel. Therefore, there's a great difficulty to evaluate easily the horizontal distance between the two axis, the difficulty being increased by the presence of the spokes of the rear wheel preventing the insertion of a normal measuring device through the spokes.

From the document US 6 467 179, which reveals the technical features of the preamble of claim 1, it is also known a measuring tool capable of angle measurement and incorporating one or more bubble levels. The document US 5 463 817 relates to a levelling device for assisting in adjusting the angular orientation of a plurality of articles. However, such known devices are not adapted for measuring the horizontal distance between two horizontal parallel axis when at least one axis is not easily accessible.

The aim of the present invention is therefore to provide a distance measuring device permitting such a measuring operation, said device being simple to manufacture and easy to be manipulated.

### SUMMARY OF THE INVENTION

In this view the present invention is concerned with a device for measuring the horizontal distance separating two horizontal parallel axis of a wheelchair as claimed in claim 1. Important features of the device are defined in the dependant claims. The present invention also concerns a method for adapting a wheelchair frame to the anatomy of the user as claimed in claims 4 to 7.

### BRIEF DESCRIPTION OF THE DRAWINGS

Other features and advantages of the present invention will appear more clearly from the detailed description of embodiments of the invention which are presented solely by way of a non-restricted example and illustrated by the attached drawings in which:
Figure 1 is a lateral schematic view of a wheelchair of the prior art;
Figure 2 is a perspective three quarter front view of a distance measuring device according to the invention;
Figure 3 is a front view of the device of Figure 2;
Figure 4 is a top view of the device of Figure 2;
Figures 5, 5A and 5B represent a front view of the device of Figure 2 during the measuring operation.

### DETAILED DESCRIPTION OF EMBODIMENTS OF THE INVENTION

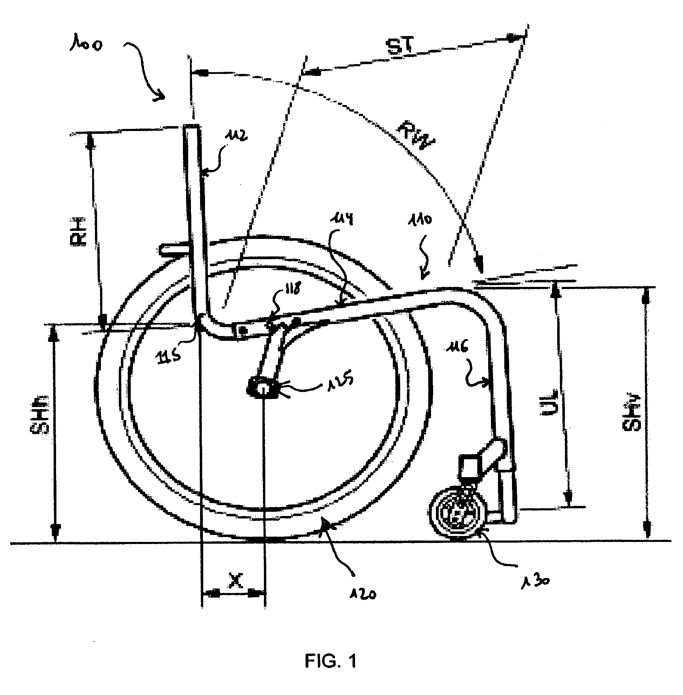

In reference to Figure 1, one can see a schematic half cut representation of a symmetrical wheelchair of the prior art, the wheelchair being seen from its right side. As usual in wheelchairs, there is a wheelchair frame 110 formed by several interconnected profiled elements defining respectively a backrest 112, a seat 114 and a legrest 116. On each side of this wheelchair frame 110 are rotatably connected a pair of rear wheels 120 and a pair of castor wheels 130. The profiled element defining the seat 114 include a series of regularly spaced assembling holes 118 constituting several assembling positions between the profiled elements defining respectively the backrest 112 and the seat 114. By modifying this assembling position, it is possible to control the position of the backrest 112 relative to the legrest 116. Indeed, depending on the anatomy of the user, this relative position should be shorter or longer. However, the modification of this assembling position has also an impact on the position of the vertical plane generally defined by the backrest 112 relative to the horizontal axis of the rear wheels 120. Such a relative position can be evaluated for instance by knowing the horizontal distance X existing between two horizontal parallel axis, one axis going through the lowest point 115 reached by the backrest 112 and the other one going through the point 125 corresponding to the position of the free end of the rear wheel axle and aligned with the rear wheel axis. Depending on the anatomy of the user and the other features of the wheelchair, this distance X can have a bad impact on the tendency to tipping of the wheelchair. Therefore, to be sure that the modification made does not increase dangerously the tendency to tipping of the wheelchair, it is important to control that the distance X is close to a reference value X_{ref} given by the manufacturer or the seller. In general, this reference value X_{ref} depends on other parameters linked to the anatomy of the user. This reference value X_{ref} can be found in a specific data table, said table indicating the distance X_{ref} in correspondence with the measured lengths of one or several body parts of the user. Other specific data tables can also provide the user with additional reference values relative to other important length or characteristic of the wheelchair. For instance, and by reference to the Figure 1, these tables can also determine the best value for the length RH of the backrest 112, the length ST for the seat 114, the length UL for the legrest 116, or for the distance SHh between the lowest point 115 of the backrest 112 and the ground or the distance SHv between the highest point of the legrest 116 and the ground. It is also possible to know the best inclination angle RW between the backrest 112 and the seat 114.

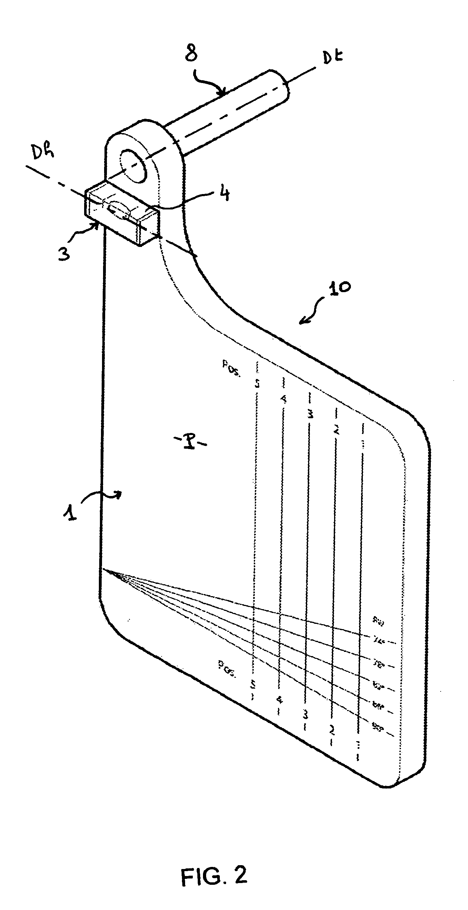

After determining the best value for X, one needs to measure with a great precision the current value X. However, it is not easy to measure the horizontal distance X between the horizontal axis going through the point 115 and the horizontal axis going through the point 125 because these two points are positioned in two parallel vertical planes separated by a rear wheel 120. Therefore, if one only owns a current business measuring tool, one needs to dismantle the rear wheel 120 to position said tool without being hindered by the spokes of the wheel. To prevent such a dismantling and permit an easy measuring operation, the invention proposes a new measuring tool as viewed in Figures 2 to 4. After having measured the current distance X by using this new measuring tool, one can compare this value with the reference value X_{ref} and, if X is different from X_{ref}, adapt the wheelchair frame 110 in order to modify X and reach the value X_{ref} for X. This can be done for instance by increasing or reducing the length ST of the seat 114 as mentioned above. Of course, this measuring tool can also be used for measuring the distance X on an already used wheelchair when one wants to know the best value for X.

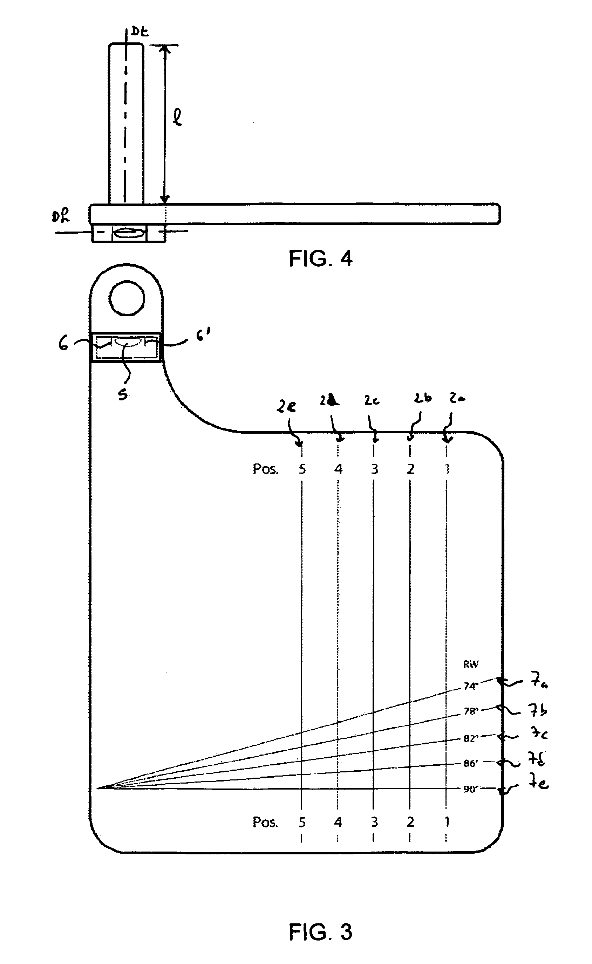

Referring to Figures 2 to 4, there is shown a measuring tool 10 according to the invention. This tool comprises a transparent support 1 defining a plane P on at least one of its side. This support is preferably made in a glass or plastic material. In the embodiment of Figure 2, the support defines approximately a rectangular form, but other forms can be used without departing from the invention. The plane surface P of the tool 10 bears at its top left corner a spirit level 3. The spirit level 3 comprises a vial 4, which encloses a bubble of air 5 inside a liquid, and two marking lines 6 and 6', between which the bubble of air 5 is centered when the spirit level 3 is level (see Figure 3). In this situation, the direction Dh defined by the spirit level 3, corresponding to the longitudinal axis of the ellipsoidal bubble of air 5, is approximately horizontal (see figure 4).

To position precisely the tool 10 during the measuring operation, the support 1 bears a tubular rod 8 fixed at its top left corner and extending in a direction Dt orthogonal to the plane P, said direction Dt corresponding to the axis of the tube formed by the rod 8. In a preferential embodiment of the invention, it could be advantageous that the length I of the rod 8 is sufficient to reach the first point 115 when the support 1 is positioned in front of and next to the second point 125, and, in particular, is bigger than the width of the rear wheel 120.

The support 1 bears also in the plane P a series of parallel marking lines 2a to 2e, said lines extending in a direction perpendicular to the direction Dh and each marking line 2a to 2e holding a number, respectively 5 to 1. The scale formed by the combination of the lines 2a to 2e is adapted for measuring a distance. Optionally, as seen on Figures 2 and 3, it is also possible to add additional marking lines 7a to 7e in order to measure the inclination angle RW mentioned above.

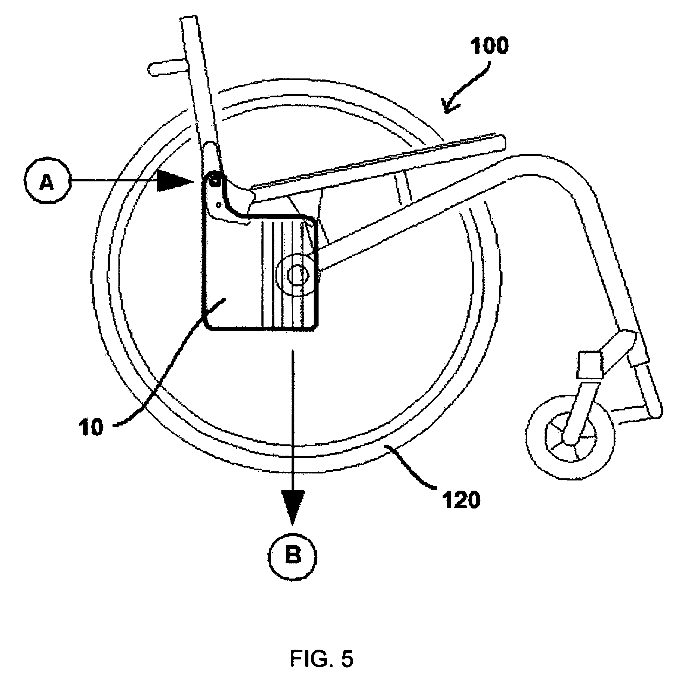

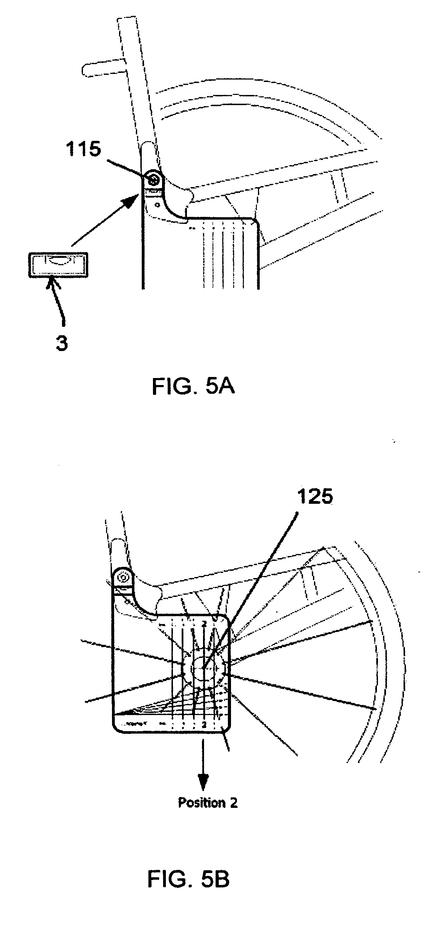

In reference to Figures 5, 5A and 5B, one can see the different steps permitting to measure the horizontal distance X by using the tool 10.

In a first step, corresponding to the detail A of Figure 5 and best viewed on Figure 5A, the tool 10 is positioned in front of the rear wheel 120 of the wheelchair 100. Then, the rod 8 of the tool 10 is aligned with the first point 115 and the spirit level 3 is level. In this position, the plane P is normally orthogonal to the axle of the rear wheel 120.

In a second step, corresponding to the detail B of Figure 5 and best viewed on the Figure 5B, one can see through the transparent support 1 of the tool 10 the position of the second point 125. The position of this second point 125 is normally situated in front of one marking line 2a to 2e or between two successive marking lines 2a to 2e. The number(s) held by this (or these) marking line(s) indicates a corresponding horizontal distance X in a unit known by the user.

## Claims

1. Device (10) for measuring the horizontal distance separating two horizontal parallel axis of a wheelchair (100), comprising:
- a spirit level (3) defining a direction Dh, said direction Dh being horizontal when the spirit level is level,
- a transparent support (1) defining a plane P on one of its sides and bearing on the said side a plurality of parallel marking lines (2a-2f), said lines extending in a direction perpendicular to the direction Dh and defining a scale,
- a positioning element (8) attached to the transparent support (1) and extending in a direction Dt orthogonal to the plane P,
**characterised in that** the positioning element (8) is positioned such that when the direction Dt is aligned with the lowest position of the backrest of said wheelchair, the rear wheel axle of the wheelchair projects onto said scale.

2. Device (10) according to claim 1 wherein the positioning element (8) has a tubular form.

3. Device (10) according to claim 2, wherein the positioning element (8) is a tubular rod having a length sufficient to reach said lowest position (115) of the backrest of said wheelchair (100) when said support (1) is positioned in front of and next to the position (125) of the free end of the rear wheel axle of the wheelchair.

4. Method for adapting a wheelchair frame (110) to the anatomy of the user, comprising the following steps:
a) measuring the length(s) of one or several body part(s) of the user;
b) finding the measured length(s) in a specific data table, said table indicating a horizontal distance X_{ref} in correspondence with this measured length(s), X_{ref} corresponding to the best value for the distance between two horizontal parallel axis of the wheelchair (100) in view of the measured length(s);
c) measuring the existing distance X between said axis of the wheelchair (100) by using the device (10) defined in one of the preceding claims;
d) comparing X and X_{ref};
e) if X is different from X_{ref} then adapting the wheelchair frame (110) in order to modify X and reach the value X_{ref} for X.

5. Method according to claim 4, wherein one axis goes through the point (125) corresponding to the position of the free end of the rear wheel axle of the wheelchair (100).

6. Method according to claim 4 or claim 5, wherein one axis goes through the lowest point (115) reached by the backrest (112) of the wheelchair (100).

7. Method according to one of the claims 4 to 6, wherein, in step e), the adaptation of the wheelchair frame (110) corresponds to the modification of the position of one profiled element defining the seat (114) of the wheelchair (100).

## Patentansprüche

1. Vorrichtung (10) zum Messen des horizontalen Abstands zwischen zwei horizontalen parallelen Achsen eines Rollstuhls (100), umfassend:
- eine Wasserwaage (3), die eine Richtung Dh definiert, wobei diese Richtung Dh horizontal ist, wenn die Wasserwaage waagrecht ist,
- eine transparente Halterung (1), die auf einer ihrer Seiten eine Ebene P definiert und auf dieser Seite eine Vielzahl von parallelen Markierungslinien (2a-2f) trägt, wobei diese Linien in einer zur Richtung Dh perpendikularen Richtung verlaufen und eine Skala definieren,
- ein Positionierelement (8), das an der transparenten Halterung (1) befestigt ist und sich in einer zur Ebene P orthogonalen Richtung Dt erstreckt,
**dadurch gekennzeichnet, dass** das Positionierelement (8) so angeordnet ist, dass die Hinterradachse des Rollstuhls auf diese Skala vorsteht, wenn die Richtung Dt mit der untersten Position der Rückenlehne dieses Rollstuhls gefluchtet ist.

2. Vorrichtung (10) nach Anspruch 1, wobei das Positionierelement (8) röhrenförmig ausgebildet ist.

3. Vorrichtung (10) nach Anspruch 2, wobei das Positionierelement (8) ein röhrenförmiger Stab mit einer Länge ist, die ausreicht, um die unterste Position (115) der Rückenlehne des Rollstuhls (100) zu erreichen, wenn die Halterung (1) vor und nahe der Position (125) des freien Endes der Hinterradachse des Rollstuhls positioniert ist.

4. Verfahren zum Anpassen eines Rollstuhlrahmens (110) an die Anatomie des Benutzers, das die folgenden Schritte umfasst:
a) Messen der Länge(n) von einem oder mehreren Körperteilen des Benutzers;
b) Auffinden der gemessenen Länge(n) in einer speziellen Datentabelle, wobei diese Tabelle einen horizontalen Abstand X_{ref} in Entsprechung mit dieser bzw. diesen gemessenen Länge bzw. Längen angibt, wobei X_{ref} dem besten Wert für den Abstand zwischen zwei horizontalen parallelen Achsen des Rollstuhls (100) in Hinblick auf die gemessenen Länge(n) angibt;
c) Messen des zwischen diesen Achsen des Rollstuhls (100) bestehenden Abstands X unter Verwendung der in einem der vorhergehenden Ansprüche definierten Vorrichtung (10);
d) Vergleichen von X und X_{ref};
e) wenn X von X_{ref} verschieden ist, dann Anpassen des Rollstuhlrahmens (110), um X zu ändern und den Wert X_{ref} für X zu erreichen.

5. Verfahren nach Anspruch 4, wobei eine Achse durch den Punkt (125) verläuft, welcher der Position des freien Endes der Hinterradachse des Rollstuhls (100) entspricht.

6. Verfahren nach Anspruch 4 oder Anspruch 5, wobei eine Achse durch den untersten Punkt (115) verläuft, den die Rückenlehne (112) des Rollstuhls (100) erreicht.

7. Verfahren nach einem der vorangehenden Ansprüche 4 bis 6, wobei in Schritt e) die Anpassung des Rollstuhlrahmens (110) der Änderung der Position eines Profilelements entspricht, das den Sitz (114) des Rollstuhls (100) definiert.

## Revendications

1. Dispositif (10) pour mesurer la distance horizontale séparant deux axes parallèles horizontaux d'un fauteuil roulant (100), comprenant :
- un niveau à bulle (3) définissant une direction Dh, ladite direction Dh étant horizontale quand le niveau à bulle est à niveau,
- un support transparent (1) définissant un plan P sur une de ses faces et portant sur ladite face une pluralité de lignes de marquage parallèles (2a-2f), lesdites lignes s'étendant dans une direction perpendiculaire à la direction Dh et définissant une échelle,
- un élément de positionnement (8) attaché au support transparent (1) et s'étendant dans une direction Dt orthogonale au plan P,
**caractérisé en ce que** l'élément de positionnement (8) est positionné de manière telle que, lorsque la direction Dt est alignée avec la position la plus basse du dossier dudit fauteuil roulant, l'axe des roues arrières du fauteuil roulant se projette sur ladite échelle.

2. Dispositif (10) selon la revendication 1, dans lequel l'élément de positionnement (8) a une forme tubulaire.

3. Dispositif (10) selon la revendication 2, dans lequel l'élément de positionnement (8) est une tige tubulaire d'une longueur suffisante pour atteindre ladite position la plus basse (115) du dossier dudit fauteuil roulant (100) lorsque ledit support (1) est positionné en face et près de la position (125) de l'extrémité libre de l'axe des roues arrières du fauteuil roulant.

4. Procédé pour adapter un cadre de fauteuil roulant (110) à l'anatomie de l'utilisateur, comprenant les étapes suivantes :
a) mesurer la/les longueur(s) d'une ou de plusieurs partie(s) du corps de l'utilisateur ;
b) trouver la/les longueur(s) mesurée(s) dans une table de données spécifique, ladite table indiquant un distance horizontale X_{ref} correspondant à cette/ces longueur(s) mesurée(s), X_{ref} correspondant à la meilleure valeur pour la distance entre deux axes parallèles horizontaux du fauteuil roulant (100) au vu de la/des longueur(s) mesurée(s) ;
c) mesurer la distance X existant entre lesdits axes du fauteuil roulant (100) en utilisant le dispositif (10) défini dans l'une des revendications précédentes ;
d) comparer X et X_{réf} ;
e) si X est différent de X_{réf}, adapter alors le cadre du fauteuil roulant (110) en vue de modifier X et d'atteindre la valeur X_{réf} pour X.

5. Procédé selon la revendication 4, dans lequel un axe passe par le point (125) correspondant à la position de l'extrémité libre de l'axe des roues arrières du fauteuil roulant (100).

6. Procédé selon la revendication 4 ou la revendication 5, dans lequel un axe passe par le point le plus bas (115) atteint par le dossier (112) du fauteuil roulant (100).

7. Procédé selon l'une quelconque des revendications 4 à 6, dans lequel, dans l'étape e), l'adaptation du cadre du fauteuil roulant (110) correspondant à la modification de la position d'un élément profilé définissant le siège (114) du fauteuil roulant (100).
